# EUROPÄISCHE PATENTSCHRIFT

(11) **EP 0 285 154 B1**
(45) Veröffentlichungstag und Bekanntmachung des Hinweises auf die Patenterteilung: **15.06.1994**
(21) Anmeldenummer: 88105236.9
(22) Anmeldetag: 31.03.1988
(51) Int. Cl.: H04L 12/28, H04Q 11/04

(54) **System zum Anschluss mehrerer Endgeräte an eine Netzabschlusseinrichtung in einem Breitbandnachrichtennetz**
System for connecting a plurality of terminals to a network-connecting equipment in a broadband network
Système de connexion de plusieurs terminaux à un dispositif de connexion de réseau dans un réseau à large bande

(30) Priorität: 01.04.1987 DE 3710868
(43) Veröffentlichungstag der Anmeldung: 05.10.1988
(73) Patentinhaber: SIEMENS AKTIENGESELLSCHAFT, 80333 München (DE); Philips Patentverwaltung GmbH, 22335 Hamburg (DE); Alcatel SEL Aktiengesellschaft, D-70435 Stuttgart (DE); Philips Electronics N.V., 5621 BA Eindhoven (NL)
(72) Erfinder: Hessenmüller, Horst, Dipl.-Ing., D-6101 Rossdorf (DE)
(74) Vertreter: Fuchs, Franz-Josef, Dr.-Ing.

(56) Entgegenhaltungen:
- EP-A- 0 112 952
- GB-A- 2 159 368
- US-A- 4 641 276

## Beschreibung

### Anwendungsgebiet und Zweck

Die Erfindung betrifft ein System zum gleichzeitigen Betrieb mehrerer Endgeräte an einer teilnehmerseitigen Netzabschlußeinrichtung in einem digitalen Breitbandnachrichtennetz, wobei die von den Endgeräten gesendeten und empfangenen sowie im Netz übermittelten Signale nach dem Prinzip der Zeitvielfachtechnik mit asynchroner Zeitlagenzuordnung übertragen werden.

### Stand der Technik

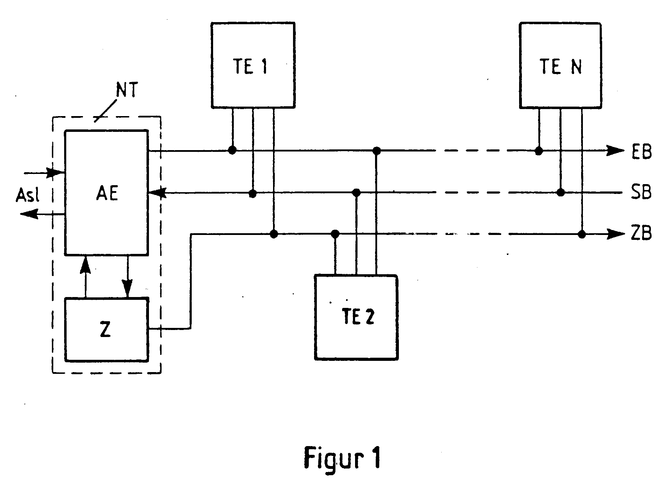

Im Konferenzband des ISSLS 1984 in Nizza ist in dem Beitrag "A Multi-Bit-Rate Asynchronous Time-Devision Equipment at the Subscriber Premises" eine Möglichkeit des Anschlusses von mehreren Endgeräten unterschiedlichster Bitrate an eine Netzabschlußeinrichtung beschrieben. Die Signale der einzelnen Kanäle sind in Pakete strukturiert, wobei jedes Paket 128 bit enthält, von denen 120 bit der Übertragung der Nutzinformation, und 8 bit als Paketkopf zur Kennzeichnung des Kanals dienen. Wie in Fig. 1 dargestellt, sind die Endgeräte TE 1 bis TE N unterschiedlichster Bitrate über drei Busleitungen mit der Netzabschlußeinrichtung NT verbunden, die die vierdrähtige Teilnehmeranschlußleitung As1 des Fernmeldenetzes abschließt und aus einer Anpaßeinrichtung AE und dem Zuteiler Z besteht. Bei den drei Busleitungen handelt es sich um den Empfangsbus EB, den Sendebus SB und den sog. Zuteilungsbus ZB. Auf dem Bus EB werden die auf der Asl ankommenden Signale zu den Endgeräten TE mit der gleichen Bitrate wie auf dieser übertragen. Entsprechend der Paketadresse verarbeitet jedes Endgerät TE nur die ihm zugeordneten Pakete. Die zeitliche Zuordnung der Pakete zu den verschiedenen Endgeräten TE ist asynchron; das nächstfolgende Paket schließt unmittelbar an das vorhergehende an. Von Zeit zu Zeit sind sog. Leerpakete von 128 bit Länge, die ein spezielles Bitmuster enthalten, das zur Synchronisation des Zeitvielfachs in jedem Endgerät TE verwendet wird, in das Zeitmultiplexsignal eingestreut.

In Senderichtung geben alle Endgeräte TE ihre Signale in paketierter Form an den Sendebus SB ab. Da eine ähnliche Prozedur, wie sie beim ISDN verwendet wird, hier nicht vorgesehen ist, könnte es zu Kollisionen der Signale der einzelnen Endgeräte TE kommen, wodurch die Information unkenntlich würde. Um dies zu verhindern, gibt es den Zuteilungsbus ZB, der vom Zuteiler Z gesteuert wird. Auf den Zuteilungsbus ZB wird ein Zeitraster übertragen, wobei eine Rasterstufe der Paketlänge entspricht. Die einzelnen Zeitlagen werden den verschiedenen Endgeräten TE entspechend deren Kapazitätsbedarf zugeordnet. Innerhalb dieser Zeitlagen geben die Endgeräte TE ihre Pakete an den Sendebus SB mit einer nennenswert höheren Bitrate ab, als sie abgehend auf der Asl verwendet wird. Dies ist erforderlich, damit zwischen den von den in Betrieb befindlichen Endgeräten TE gesendeten Paketen eine mehr oder wenige große Schutzzeit entsteht, die verhindert, daß es zu zeitlichen Überschneidungen der Pakete kommt. Diese Überschneidungen würden durch die unterschiedliche elektrische Entfernung der Endgeräte TE von der Netzabschlußeinrichtung NT und die damit verbundenen unterschiedlichen Laufzeiten der Signale sowohl auf den Zuteilungsbus ZB, als auch auf den Sendebus SB hervorgerufen.

In der zu der Netzabschlußeinrichtung NT gehörenden Anpaßeinrichtung wird für die Anschlußleitung Asl abgehend ein isochroner Bitstrom aus den vom Sendebus SB empfangenen Signalen gebildet, in dem ein Paket dem nächsten ohne Zwischenraum folgt.

### Kritik des Standes der Technik

Das geschilderte Verfahren hat den entscheidenden Nachteil, daß jedes Endgerät mit drei zu installierenden Busleitungen verbunden werden muß. Hinzu kommt, daß wegen der erwähnten erforderlichen Schutzzeiten die Datengeschwindigkeit auf dem Sendebus SB höher sein muß als auf der Anschlußleitung Asl. Damit verbunden ist eine notwendige Umsetzung der Datengeschwindigkeit in abgehender Richtung in der Netzabschlußeinrichtung NT. Außerdem unterliegt die Länge der Anschlußkabel der Endgeräte TE gewissen Einschränkungen in der Weise, daß die elektrisch maßgebliche Gesamtentfernung jedes Endgerätes TE von der Netzabschlußeinrichtung NT ein ganzzahliges Vielfaches der Leitungslänge ist, deren Laufzeit der Dauer eines Bits entspricht. Nur so kann sichergestellt werden, daß auf dem Sendebus ein isochrones Datensignal entsteht, für das eine einfache Regeneration einschließlich Taktrückgewinnung benötigt wird. Eine von eigener Seite vorgeschlagene Lösung der gleichen Aufgabe für ein ISDN-B-Netz beinhaltet die oben dargestellten Nachteile zwar nicht, ist aber auf synchrone Übertragung beschränkt.

### Aufgabe

Der Erfindung liegt deshalb die Aufgabe zugrunde ein Verfahren anzugeben, das die vorstehend aufgeführten Nachteile nicht hat und bei dem insbesonders nur ein Sendebus SB und ein Empfangsbus EB existieren. Die Datengeschwindigkeit auf dem Sendebus SB soll dabei identisch derjenigen auf der Anschlußleitung Asl sein. Es existieren also keine variablen Schutzzeiten zwischen den von den einzelnen Endgeräten ausgesendeten Paketen.

### Lösung

Diese Aufgabe wird bei einem System zum gleichzeitigen Betrieb mehrerer Endgeräte an einer teilnehmerseitigen Netzabschlußeinrichtung in einem digitalen Breitbandnachrichtennetz mit Zeitvielfachübertragung und asynchroner Zeitlagenzuordnung, bei dem die Übertragung zwischen Netzabschlußeinrichtung und den Endgeräten über einen passiven Empfangsbus erfolgt, dadurch gelöst, daß für die Übertragung zwischen Endgeräten und Netzabschlußeinrichtung ein aktiver, ringförmig ausgebildeter Sendebus vorgesehen ist. Jedes Endgerät weist ebenso wie die Netzabschlußeinrichtung je einen Sender und je einen Empfänger für den Sendebus auf. Sender und Empfänger für den Sendebus sind in den Endgeräten über eine Dateneinfügungseinrichtung miteinander verbunden, welche die Daten jedes Endgerätes in den auf dem Sendebus übertragenen Bitstrom einfügt.

### Weitere Ausgestaltung

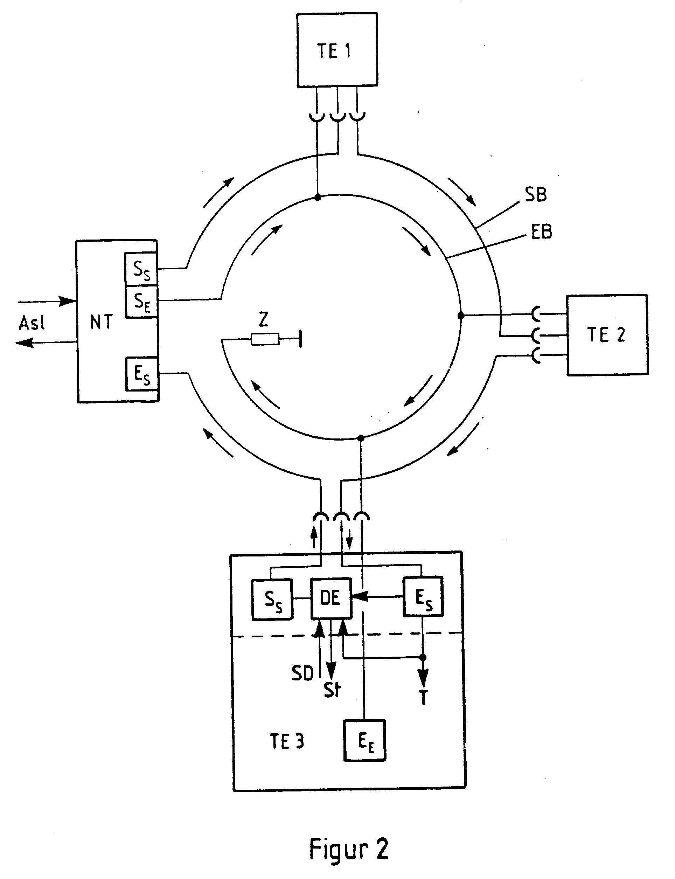

Um zu verhindern, daß infolge eines Defekts in der üblicherweise flexiblen Anschlußschnur eines Endgerätes TE der Sendebus SB unterbrochen wird, sind vorteilhaft die in Fig. 2 beim Endgerät TE 1 oberhalb einer gestrichelten Linie dargestellten Funktionsgruppen Empfänger E_{S}, Dateneinfügungseinrichtung DE und Sender S_{S} in der Geräteanschlußdose untergebracht.

### Erzielbare Vorteile

Die mit der Erfindung erzielbaren Vorteile bestehen insbesondere darin, daß zwischen den von den verschiedenen Endgeräten ausgesendeten Datenpaketen keine Schutzzeiten zur Vermeidung von Signalkollissionen mehr erforderlich sind und somit keine Umsetzung der Geschwindigkeit des auf dem Sendebus SB entstehenden Zeitvielfachs für die Übertragung auf der Anschlußleitung Asl mehr eforderlich ist. Außerdem wird durch Wegfallen des beim Stand der Technik beschriebenen Zuteilungsbus ZB die Anzahl der in der Teilnehmerstation erforderlichen Busleitungen von drei auf zwei verringert. Dadurch, daß die Signale auf dem Sendebus SB praktisch in jedem Endgerät regeneriert werden, kann der Sendebus eine größere Ausdehnung haben.

### Beschreibung

Ein Ausführungsbeispiel nach der Erfindung wird anhand der Figuren 1 bis 3 näher erläutert.

Es zeigen:
- Fig. 1: eine Anschlußkonfiguration nach dem bereits geschilderten Stand der Technik
- Fig. 2: das Funktionsschaltbild eines Beispiels mit drei Endgeräten TE 1 bis TE 3 für eine Anschlußkonfiguration nach der Erfindung
- Fig. 3: den zugehörigen zeitlichen Signalverlauf an den Ausgängen der Netzabschlußeinrichtung NT und der Endgeräte TE 1 bis TE 3 bezüglich der Ringleitung SB.

In Fig. 2 ist in der Netzabschlußeinrichtung NT ein Sender S_{E} dargestellt, der die von der Anschlußleitung Asl empfangenen Signale in bekannter Weise in den passiven, am Ende mit dem Wellenwiderstand Z abgeschlossenen Empfangsbus EB einspeist. Jedes Endgerät TE besitzt einen Empfänger E_{E}, der anhand der Adresse im Paketkopf nur die für das betreffende Endgerät TE bestimmten Pakete aus dem empfangenen Datenstrom zur weiteren Verarbeitung im Endgerät auswählt.

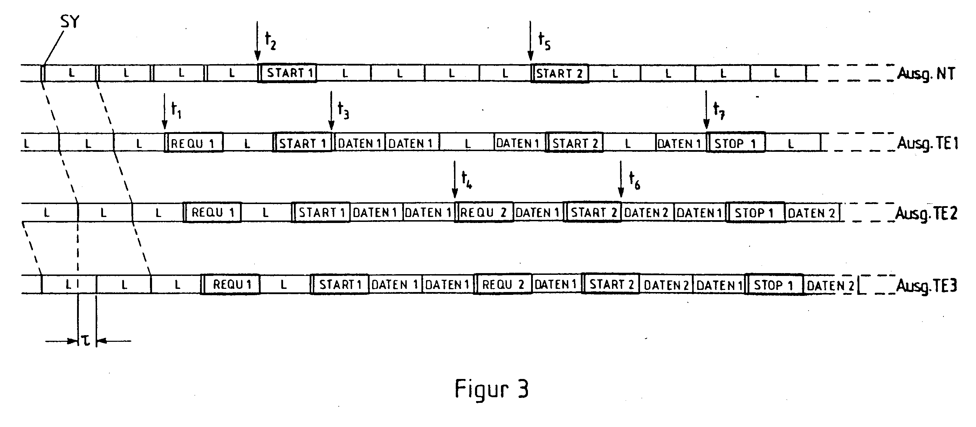

Die Netzabschlußeinrichtung NT enthält weiterhin einen Sender S_{S}, der für den Fall, daß noch kein Endgerät TE aktiv ist, eine kontinuierliche Folge von sog. Leerpaketen L aussendet. Jedes Leerpaket L überträgt mit einem Teil seiner Kapazität von z. B. 64 bit ein Synchronmuster SY, wodurch es möglich ist, sofort ohne Anwendung des Schwungradprinzips o. ä., auf die Paketgrenzen zu synchronisieren. Die 64-bit-Kombination lautet beispielsweise, hexadezimal ausgedrückt "65 AE F3 15 3F 41 C2 46" (Beschrieben in "Specification of Transmission System for the Broadcasting-Satellite Service", CCIR Special Publication, Genf, April 1986). Die Folge der Leerpakete wird in jedem Endgerät TE von dessen Empfänger E_{S} empfangen und über die Dateneinfügungseinrichtung DE an den Sender S_{S} gegeben, der sie für den nächsten Abschnitt der Ringleitung SB aussendet. Nach Durchlaufen sämtlicher Endgeräte TE wird das Signal schließlich vom Empfänger E_{S} in der Netzabschlußeinrichtung NT empfangen. Für die Übertragung auf dem Sendebus SB wird ein Code verwendet, dessen Leistungsdichtespektrum keinen Gleichstromanteil hat, z. B. ein CMI-Code. Dadurch ist die Fernspeisung der Endgeräte TE von der Netzabschlußeinrichtung NT aus mittels einfacher L-C-Kombinationen über den Sendebus SB möglich. Besteht nun, wie in Fig. 3 dargestellt, beim Endgerät TE 1 zum Zeitpunkt t₁ die Anforderung nach einem Verbindungsaufbau, so wird in der Dateneinfügungseinrichtung DE von dem Endgerät TE 1 das nächstmögliche Leerpaket durch ein Paket "REQU 1" mit einer entsprechenden Anfrage an die Netzbabschlußeinrichtung NT ersetzt. Das Anforderungspaket REQU 1 wird durch die Funktionsgruppen E_{S}, DE und S_{S} der nachfolgenden Endgeräte TE 2 und TE 3 geschleift und dabei jeweils um die Laufzeit τ verzögert. Die Netzabschlußeinrichtung erkennt den Verbindungswunsch und gibt zur Zeit t₂ durch ein Paket "START 1" die Aufforderung zum Senden an das Endgerät TE 1. TE 1 beginnt zum Zeitpunkt t₃ mit dem Aussenden von Datenpaketen "DATEN 1", die wiederum durch die Funktionsgruppen E_{S}, DE und S_{S} geschleift werden. Um die Dateneinfügungseinrichtung DE in den Endgeräten nicht zu aufwendig zu gestalten, werden auch die START-Pakete bis zurück zu der Netzabschlußeinrichtung NT durchgeschleift. In gleicher Weise wie vorstehend beschrieben findet von t₄ bis t₆ die Startprozedur für das Endgeräte TE 2 statt. Zum Zeitpunkt t₇ signalisiert TE 1 durch ein Paket "STOP 1" das Ende seiner Aussendung.

Durch den in Fig. 3 dargestellten zeitlichen Signalverlauf könnte der Eindruck entstehen, als ob die am Ende der Ringleitung Sendebus SB befindlichen Endgeräte TE bezüglich des Zugriffs zu dieser benachteiligt seien. Dies ist nur bezüglich einer größeren durchschnittlichen Verzögerung beim Absetzen von Datenpaketen richtig. Die generelle Verfügbarkeit ist gewährleistet. Die Steuerung in der Netzabschlußeinrichtung NT muß nämlich so ausgelegt sein, daß nur so vielen Endgeräten TE die Sendeerlaubnis gegeben wird, daß die Summe der Datenraten aller in Betrieb befindlichen Endgeräten TE etwas kleiner ist als die Datenrate auf der Ringleitung des Sendebus SB. Sofern diese Forderung erfüllt ist, stehen auch bei voller Auslastung vom Sendebus SB am letzten Endgerät noch genügend Leerpakete zur Synchronisierung des Zeitvielfachs zur Verfügung.

Das im unteren Teil der Fig. 2 etwas detailierter dargestellte Endgerät TE 3 verdeutlicht die Funktion wesentlicher Teile eines Endgerätes TE. Sofern sich das Endgerät TE im Betriebszustand befindet und von der Dateneinfügungseinrichtung DE ein Leerpaket erkannt wird, gibt die Dateneinfügungseinrichtung DE ein Steuersignal St an den geräteinternen Paketierer, wodurch aus diesem mit dem in E_{S} gewonnenen Ringleitungstakt T ein Datenpaket auf der Leitung SD an die Dateneinfügungeinrichtung DE gegeben wird. Diese setzt das Datenpaket an die Stelle des zuvor identifizierten Leerpakets.

Die Leitungen EB und SB können als Koaxial- oder als Lichtwellenleiterleitungen ausgelegt sein. Im letzteren Fall sind dannn zusätzlich elektro-optische Wandler und eine gesonderte Zuführung der Stromversorgung erforderlich.

## Patentansprüche

1. System zum gleichzeitigen Betrieb mehrerer Endgeräte (TE1, TE2, ...) an einer teilnehmerseitigen Netzabschlußeinrichtung (NT) in einem digitalen Breitbandnachrichtennetz mit Zeitvielfachübertragung und asynchroner Zeitlagenzuordnung, bei dem die Übertragung zwischen Netzabschlußeinrichtung (NT) und den Endgeräten über einen passiven Empfangsbus (EB) erfolgt, **dadurch gekennzeichnet,** daß für die Übertragung zwischen Endgeräten und Netzabschlußeinrichtung ein aktiver, ringförmig ausgebildeter Sendebus (SB) vorgesehen ist,
wobei jedes Endgerät (TE1, TE2 ...) ebenso wie die Netzabschlußeinrichtung (NT) je einen Sender (S_{S}) und je einen Empfänger (E_{S}) für den Sendebus (SB) aufweist,
die in den Endgeräten über eine Dateneinfügungseinrichtung (DE) miteinander verbunden sind, welche die Daten jedes Endgerätes in den auf dem Sendebus (SB) übertragenen Bitstrom einfügt.

2. System nach Anspruch 1, dadurch gekennzeichnet, daß der Sender (S_{S}) und der Empfänger (S_{E}) und die Dateneinfügungseinrichtung (DE) in der Anschlußdose für das jeweilige Endgerät (DE) untergebracht sind.

3. System nach Anspruch 1, dadurch gekennzeichnet, daß auf dem Sendebus (SB) ein gleichkomponentenfreier Code verwendet wird, der eine durch einfache L-C-Glieder entkoppelte Fernspeisung erlaubt.

## Claims

1. System for simultaneously operating a number of terminals (TE1, TE2, ...) on a network terminating unit (NT) at the subscriber end in a digital broadband communication network with time-division multiplex transmission and asynchronous time slot allocation, in which the transmission between network terminating unit (NT) and the terminals takes place via a passive receive bus (EB), characterized in that an active transmit bus (SB) of ring form is provided for the transmission between terminals and network terminating unit, each terminal (TE1, TE2) and the network terminating unit (NT) in each case exhibiting a transmitter (S_{S}) and in each case a receiver (E_{S}) for the transmit bus (SB), which are connected to one another in the terminals via a data insertion device (DE) which inserts the data of each terminal into the bit stream transmitted on the transmit bus (SB).

2. System according to Claim 1, characterized in that the transmitter (S_{S}) and the receiver (S_{E}) and the data insertion device (DE) are accommodated in the connection box for the respective terminal (DE).

3. System according to Claim 1, characterized in that a code free of DC components, which allows power feed decoupled by simple L-C elements, is used on the transmit bus (SB).

## Revendications

1. Système pour faire fonctionner simultanément plusieurs terminaux (TE1, TE2, ...), raccordés à un dispositif de terminaison de réseau (NT) situé côté abonné, dans un réseau numérique de transmission d'informations à large bande comportant une transmission en multiplexage temporel et une association asynchrone des positions temporelles, et dans lequel la transmission entre un dispositif de terminaison de réseau (NT) et les terminaux s'effectue par l'intermédiaire d'un bus de réception passif (ES), caractérisé par le fait qu'un bus d'émission actif (SB) réalisé avec une forme en anneau est prévu pour la transmission entre des terminaux et le dispositif de terminaison de réseau,
chaque terminal (TE1, TE2...) ainsi que le dispositif de terminaison de réseau (NT) comportant respectivement un émetteur (S_{S}) et respectivement un récepteur (E_{S}) pour le bus d'émission (SB),
qui, dans les terminaux, sont reliés entre eux par l'intermédiaire d'un dispositif (DE) d'insertion de données, qui insère les données de chaque terminal dans le flux de bits transmis dans le bus d'émission (SB).

2. Système suivant la revendication 1, caractérisé par le fait que l'émetteur (S_{S}) et le récepteur (S_{E}) et le dispositif (DE) d'insertion de données sont logés dans la prise de raccordement prévue pour chaque terminal (DE).

3. Système suivant la revendication 1, caractérisé par le fait que dans le bus d'émission (SB) on utilise un code sans composante continue, qui permet une alimentation à distance découplée par de simples circuits L-C.
